(19) Europäisches Patentamt
European Patent Office
Office européen des brevets

(11) Veröffentlichungsnummer: **0 193 755**
**A1**

(12) # EUROPÄISCHE PATENTANMELDUNG

(21) Anmeldenummer: **86101735.8**

(22) Anmeldetag: **12.02.86**

(51) Int. Cl.⁴: **C 08 G 75/02**, C 08 G 75/23

(30) Priorität: **05.03.85 DE 3507691**

(43) Veröffentlichungstag der Anmeldung: **10.09.86 Patentblatt 86/37**

(84) Benannte Vertragsstaaten: **BE CH DE FR GB IT LI NL SE**

(71) Anmelder: **HÜLS AKTIENGESELLSCHAFT, Patentabteilung / PB 15 - Postfach 13 20, D-4370 Marl 1 (DE)**

(72) Erfinder: **Neugebauer, Wolfgang, Dr., Holunderstrasse 9, D-4370 Marl (DE)**
Erfinder: **Bartmann, Martin, Dr., Burgstrasse 35, D-4350 Recklinghausen (DE)**
Erfinder: **Burzin, Klaus, Dr., Wellerfeldweg 164, D-4370 Marl (DE)**

(54) **Homo- und Copolymere von keto- und ethergruppenhaltigen Polyarylensulfiden und Verfahren zu ihrer Herstellung.**

(57) Die Erfindung betrifft Homo- und Copolymere von Polyarylensulfiden, die durch Umsetzung von sulfidfreisetzenden Reagenzien (I) und gegebenenfalls anorganischen Basen (II) mit einem difunktionellen aromatischen Etherketon (III) der Formel

Hal-Ar-CO-Ar-O-Ar-CO-Ar-Hal

und gegebenenfalls einer weiteren difunktionellen Verbindung der Formel IV

$$Hal\text{-}(Ar\text{-}X)_m\text{-}(Ar\text{-}Y)_n\text{-}Ar\text{-}(Z)_o\text{-}Ar\text{-}(Y\text{-}Ar)_p\text{-}(X\text{-}Ar)_m\text{-}Hal \qquad IV$$

erhalten werden.

EP 0 193 755 A1

Homo- und Copolymere von keto- und ethergruppenhaltigen Polyarylensulfiden und Verfahren zu ihrer Herstellung

Die Erfindung betrifft lineare Homo- und Copolymere von Polyarylensulfiden, die aromatisch gebundene Carbonyl-, sowie gegebenenfalls auch Ether- und/oder Sulfongruppen enthalten.

Aromatische Polyether- und -thioetherketone der allgemeinen Formel

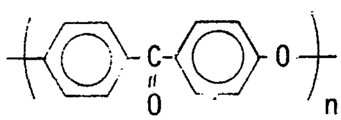 bzw. 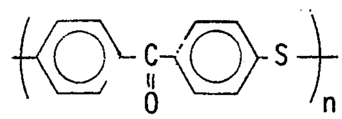

sind bekannt (vgl. US-PS 3 442 857 bzw. DE-OS 21 64 291). Beide Polymere sind kristallin und besitzen einen derart hohen Schmelzpunkt ($T_m$ 367 °C bzw. 352 °C), daß ihre Verarbeitung mit konventionellen Mitteln nur schwer möglich ist.

Polyphenylensulfide sind ebenfalls bekannt (vgl. US-PSS 2 538 941, 2 513 188 und DE-AS 14 68 782). Sie können durch Reaktion von Dihalogenaromaten mit Alkali- oder Erdalkalisulfiden in Masse oder in polaren Lösemitteln hergestellt werden.Als Aktivatoren werden vor allem Alkalicarboxylate eingesetzt (vgl. DE-PS 24 53 749, DE-OS 26 23 363, US-PS 4 038 259 und US-PS 4 038 263).

Anstelle von Alkalisulfiden können auch organische Thioverbindungen eingesetzt werden. Üblicherweise werden jedoch größere Mengen S-haltiger Verbindungen benötigt, die bei der Isolierung der Polymeren zu Aufarbeitungsschwierigkeiten führen. Die hohen Schwefelkonzentrationen in den anfallenden Ablaugen stellen darüber hinaus eine erhebliche Umweltbelastung dar.

Das Verfahren der DE-AS 16 20 923 weist den Nachteil auf, daß sich während der Entwässerung des wasserhaltigen Alkalisulfids feste

Klumpen von wassserfreiem Salz bilden, die auch unter drastischen Reaktionsbedingungen nicht vollständig zur Reaktion zu bringen sind. Im allgemeinen müssen die so hergestellten Polyphenylensulfide zur Eigenschaftsverbesserung noch einem an die Polykondensation anschließenden Härtungsschritt unterworfen werden (z. B. US-PSS 3 717 620, 3 524 835 und 3 839 301), bei dem über Vernetzungsreaktionen die zur Anwendung ausreichend hohen Molekulargewichte aufgebaut werden. Dies bedeutet aber, daß nunmehr die Gefahr des Verlustes thermoplastischer Eigenschaften besteht. Auch durch die Mitverwendung von Tri- und Polyhalogenaromaten und die daraus resultierende Vernetzung läßt sich eine Erhöhung des Molekulargewichts erzielen (vgl. DE-OSS 28 17 731 und 32 05 996).

Nach dem Stand der Technik werden Polyarylensulfide, die für Formmassen geeignet sind, üblicherweise nur zweistufig oder unter Zusatz von Vernetzungsmitteln erhalten. Nachteilig bei der 2-stufigen Verfahrensweise ist jedoch, daß bei den hohen Temperaturen, die zur vollständigen Entfernung des Wassers erforderlich sind, Reaktionen des Lösemittels mit Wasser auftreten, wobei Schwefelwasserstoff entweicht und die Stöchiometrie der Reaktion in unkontrollierbarer Weise gestört wird.

Die DE-PS 24 53 749 (= US-PS 3 919 177) beschreibt ein Verfahren zur Herstellung eines p-Phenylensulfidpolymeren, wobei ein p-Dihalogenbenzol bei 230 - 450 °C mit einer S-haltigen Verbindung in Gegenwart eines organischen Amids, eines Alkalicarboxylats und gegebenenfalls einer Base umgesetzt wird.

Die DE-OS 27 49 645 beschreibt Polyether, die durch Kondensation von Bisphenolen mit Dihalogenbenzolverbindungen oder durch Kondensation von Halogenphenolen erhalten werden. Nach den Ansprüchen 3 und 5 soll es auch möglich sein, als Comonomere Thiophenole einzusetzen. Es überrascht nicht, daß sich hierfür in der angegebenen Schrift keine experimentellen Hinweise finden, da Thiophenole bekanntlich außerordentlich oxidationsempfindlich sind.

Es sind ferner schwefelhaltige Polymere auf Basis des nur aufwendig herstellbaren 4,4'-Difluorbenzophenons, Hydrochinons und Thiodiphenols bekannt, die in Gegenwart von Alkylicarbonaten hergestellt werden. Nachteilig ist die geringe Reaktionsgeschwindigkeit, die Temperaturen über 300 °C erforderlich macht (vgl. EP-PS 0 001 879, EP-OS 0 010 868 und US-PS 4 176 222).
Ein Ziel der vorliegenden Erfindung war es, Homo- und Copolymere von Polyarylensulfiden mit verbesserten Materialeigenschaften zugänglich zu machen. Ein weiteres Ziel bestand darin, das Verfahren zur Herstellung dieser Polyarylensulfide zu vereinfachen und zu verbessern.

Es wurden jetzt leicht zugängliche Homo- und Copolymere von Polyarylensulfiden mit wiederkehrenden Einheiten der Formel

$$-\!\!\!\left(\ Ar - CO - Ar - O - Ar - CO - Ar - S\ \right)\!\!\!-$$

gefunden, deren Erweichungspunkt bei 330 °C liegt. Diese sind durch Umsetzung von sulfidfreisetzenden Reagenzien, gegebenenfalls anorganischen Basen, einem difunktionellen aromatischen Etherketon und gegebenenfalls einer weiteren difunktionellen aromatischen Verbindung erhältlich. Damit wird der vorbeschriebenen Klasse der Polyphenylensulfide, deren Erweischungspunkt bei etwa 280 °C liegt, ein neuer anspruchsvoller Bereich erschlossen.

Gegenstand der vorliegenden Erfindung sind die Verfahren zur Herstellung dieser Homo- und Copolymeren nach den Ansprüchen 1 bis 9 sowie die Polymeren nach den Ansprüchen 10 bis 14.

Als sulfidfreisetzende Reagenzien I können Alkali- und Erdalkalisulfide, elementarer Schwefel, Xanthogenate, Thiosulfate, Thioamide oder Thiocarbamate sowie deren Mischungen eingesetzt werden. Es ist auch möglich, Gemische der soeben aufgeführten Verbindungen mit bis zu 50 Mol-% Alkalibisthiophenolaten oder Alkalibisphenolaten einzusetzen. Bevorzugt wird Natriumsulfid verwendet.

Setzt man als sulfidfreisetzende Verbindung ein Alkalisulfid oder ein Mercaptid ein, so kommt es unmittelbar zur Ausbildung von Oligo- und Polymeren. Setzt man jedoch eine andere sulfidfreisetzende Verbindung ein, so ist es erforderlich, eine Base II zuzusetzen. Geeignete Basen sind beispielsweise (Erd) Alkalihydroxide und -carbonate. Bezogen auf 1 Mol sulfidfreisetzendem Reagenz (I) können bis 10 Mol II eingesetzt werden.

Die Homopolymeren werden durch Umsetzung eines difunktionellen aromatischen Etherketons III der allgemeinen Formel

Hal - Ar - CO - Ar - O - Ar - CO - Ar - Hal,

wobei Ar für die Gruppierung 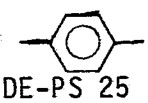 und Hal für Fluor oder insbesondere Chlor steht (vgl. DE-PS 25 49 529, Spalte 4, Zeile 54, bis Spalte 5, Zeile 2, sowie US-PS 4 065 437), mit den vorstehend beschriebenen S-haltigen Verbindungen I erhalten.

Die Copolymeren entstehen beim Einsatz eines Gemisches aus 10 bis 99,9 Mol-% der genannten difunktionellen aromatischen Etherketone III und 90 bis 0,1 Mol-% difunktioneller aromatischer Verbindungen IV der Formel

$$Hal-(Ar-X)_m-(Ar-Y)_n-Ar-(Z)_o-Ar-(Y-Ar)_p(X-Ar)_m-Hal.$$

Dabei haben Ar und Hal die vorstehend aufgeführten Bedeutungen. m, n, o und p können unabhängig voneinander die Beduetung von 0 bis 1 haben. X, Y und Z stehen für die Carbonyl- oder Sulfonylgruppe. Wenn m den Wert 1 hat, können Y und Z auch für die Ether- und Thioethergruppierung stehen. Vorzugsweise liegt der Anteil der difunktionellen aromatischen Etherketone (III) zwischen 50 und 99 Mol-%.

Vorzugsweise werden folgende difunktionellen aromatischen Verbindungen IV als Comonomere eingesetzt:

1. Diphenylsulfone oder -ketone der allgemeinen Formel

Hal - Ar - Z - Ar - Hal mit Z = $SO_2$, CO,

insbesondere 4,4'-Dichlordiphenylsulfon und 4,4'-Dichlorbenzophenon.

2. Terephthalophenone der allgemeinen Formel

Hal - Ar - CO - Ar - CO - Ar - Hal,

insbesondere 4,4'-Dichlorterephthalophenon.

3. Aromatische Thioetherketone der allgemeinen Formel

$(Hal - Ar - CO - Ar - O - Ar)_2-S$,

insbesondere 4,4'-Bis-(p-chlorphenylsulfonyl)-diphenylether.

4. Bisdiphenylsulfone der Formel

Hal - Ar - $SO_2$ - Ar - Ar - $SO_2$ - Ar - Hal,

insbesondere 4,4'-Bis-(p-chlorphenylsulfonyl)-biphenyl.

Durch Zusatz dieser Verbindungen erhält man überraschenderweise besonders farbhelle Produkte guter Kristallisierbarkeit, bei denen der Viskositätsaufbau in der Schmelze vermindert ist. Derartig hochwertige Produkte sind sonst nur mit Hilfe der teuren Difluorverbindungen erhältlich.

Die Reaktion wird üblicherweise in Lösung durchgeführt. Vorteilhaft sind polare aprotische, hochsiedende Lösemittel, wie tertiäre Amide, N-substituierte Lactame, tetrasubstituierte Harnstoffe, N-substituierte cyclische Imide, Dialkyl-, Diarylsulfone, tertiäre Arylsulfonsäureamide, 1-Alkyl- und/oder 1-Aryl-1-Oxophospholane und deren Mischungen. Bevorzugt werden N-Methylpyrrolidon, Diphenylsulfon, N,N-Dimethylformamid und insbesondere N,N-Dimethylbenzamid. Bei Verwendung von Diphenylsulfon, das bei Raumtemperatur fest ist, wird zweckmäßigerweise bei der Aufarbeitung ein weiteres Lösemittel, wie z. B. 1,2-Dichlorbenzol, eingesetzt, um das Ausfällen des Diphenylsulfons zu verhindern. Das Volumenverhältnis Lösemittel/Feststoff liegt zwischen 1 : 1 und 20 : 1.

Das Endstadium der Reaktion wird vorzugsweise unter wasserfreien Bedingungen durchgeführt. Insbesondere ist es vorteilhaft, kristallwasserhaltige Alkalisulfide durch Destillation mit einer Verbindung zu entwässern, die zur Ausbildung von Azeotropen in der Lage ist, wie z. B. Toluol, Anisol oder Di-n-butylether. Diese Entwässerung kann auch in situ durchgeführt werden. Alternativ ist auch die vorherige Entwässerung der Salze unter Vakuum in der Wärme möglich.

Eine andere bevorzugte Verfahrensvariante besteht darin, unmittelbar von der hydratisierten Form der Alkalisulfide auszugehen und die azeotrope Entwässerung gleichzeitig mit der Reaktion durchzuführen. In diesem Falle enpfiehlt es sich, ein Schleppmittel (VI) und Salze (V) mit zumindest gewisser Löslichkeit im organischen Reaktionsmedium zuzusetzen.

Geeignete Salze (I) in diesem Sinne sind:
- die Alkali- und Erdalkalisalze von aliphatischen, aromatischen oder araliphatischen Mono- und Dicarbonsäuren mit bis zu 10 C-Atomen
- die Alkali- und Erdalkalisalze von Mono- oder Disulfonsäuren, deren organischer ein- bzw. zweiwertiger Rest maximal 10 C-Atome umfaßt
- Alkali- und Erdalkalibromid oder -iodid
- tetrasubstituiertes Phosphoniumbromid oder -iodid, wobei jeder Substituent ein organischer Rest mit maximal 16 C-Atomen ist.

Die Menge dieser Salze liegt - bezogen auf die Molmenge des eingesetzten Alkalisulfids - zwischen 1 und 200 %, vorzugsweise zwischen 10 und 150 %.

Als Schleppmittel (VI) eignen sich Ether, Alkane, Cycloalkane und Alkylaromaten, deren Siedepunkt bei Normaldruck zwischen 40 und 160 °C liegt. Besonders geeignet sind Cyclohexan und Di-n-butylether, insbesondere aber Toluol, Xylol und Heptan. Die Menge des Schleppmittels (VI) hängt sowohl von der Menge des auszukreisenden Wassers als auch von der Verfahrensführung ab.

Die Reaktion sollte so durchgeführt werden, daß kein Luftsauerstoff zugegen ist, beispielsweise in Gegenwart eines Inertgases, wie Stickstoff. Es empfiehlt sich daher, die eingesetzten Lösemittel auf geeignete Weise vom gelösten Sauerstoff zu befreien.

Im Falle des Einsatzes einer relativ großen Menge S-haltiger Verbindungen I wird kurz vor Ende der Reaktion zweckmäßigerweise ein Alkylierung-, Acylierungs- oder Arylierungsmittel zugesetzt, um die thermischen Eigenschaften des Polymeren zu verbessern.

Geeignete Alkylierungsmittel sind $C_{1-3}$-Alkylhalogenide, wie z. B. Methylchlorid oder Ethylbromid, Dimethylsulfat oder ein Arylsulfonsäurealkylester, dessen zugrundeliegender Alkohol maximal 3 C-Atome enthält.

Als Acylierungsmittel kommen insbesondere Acetylchlorid, Acetanhydrid und Benzoylchlorid in Frage.

Geeignete Arylierungsmittel sind durch CO- und $SO_2$-Gruppen aktivierte aromatische Halogenverbindungen, wie z. B. 4-Chlordiphenylsulfon oder 4-Chlorbenzophenon. Geeignet sind aber auch die aufgeführten difunktionellen aromatischen Verbindungen IV.

Die zweistufige Reaktionsführung sieht beispielsweise folgendermaßen aus:

1. Zunächst werden die eingesetzten Lösemittel von Sauerstoff befreit.

2. Dann wird das Natriumsulfid entwässert.

3. Man setzt das difunktionelle aromatische Etherketon III, das Lösemittel und gegebenenfalls die difunktionelle aromatische Verbindung IV zu und erhitzt unter Schutzgasatmophäre auf die gewünschte Reaktionstemperatur.

4. Man hält die Mischung bis zu 36 Stunden bei dieser Temperatur.

5. Gegebenenfalls kann ein Alkylierungs-, Acylierungs- oder Arylierungsmittel zugesetzt werden.

6. Man fällt das Produkt aus und reinigt es durch Auskochen mit einem polaren Lösemittel.

Günstiger ist es jedoch, einstufig zu arbeiten. Danach geht man unmittelbar von einem Gemisch eines wasserhaltigen Alkalisulfids (I), einer anorganischen Base (II), einem difunktionellen Etherketon (III), einer difunktionellen aromatischen Verbindung (IV), einem Salz (V) und einem Schleppmittel (VI) aus, erhitzt das Gemisch, wobei zunächst das Waser mit Hilfe des Schleppmittels ausgekreist und dann das Schleppmittel abdestilliert wird, und führt die Reaktion bei erhöhter Temperatur zu Ende. Man kann auch nur die Komponenten III, IV und VI vorlegen und eine wäßrige Lösung der Komponenten I, II und V in einem solchen Maße zutropfen, daß das in das Reaktionsgefäß tropfende Wasser praktisch gleichzeitig mit dem Schleppmittel ausgekreist wird.

Die erhaltenen Produkte weisen ein Molekulargewicht von 2 000 bis 500 000 auf. Wünscht man ein hohes Molekulargewicht, wie es für den Spritzguß, die Extrusion oder die Herstellung von Filmen erwünscht ist, so empfiehlt es sich, unter Bedingung zu arbeiten, bei denen das sich bildende Polymere in jedem Stadium der Reaktion in Lösung bleibt. Dies bedeutet, daß man die Reaktion bei höherer Temperatur durchführt, ein Lösemittel mit verbesserter Löslichkeit für die Polymeren, wie z. B. Dimethylbenzamid, einsetzt und/oder neben den Etherketonen III auch die difunktionellen Verbindungen IV einsetzt.

Niedermolekulare Produkte können beispielsweise als Komponenten von Polymerblends oder für die Metallbeschichtung mit anschließender Härtung verwendet werden.

Die Messung der Viskosität $eta_{red}$ erfolgt analog zu DIN 53 728 durch Auflösung von 0,5 g Substanz in 100 cm³ konzentrierter Schwefelsäure und anschließender Messung bei 25 °C.

Die $T_m$-Werte werden mit einem Perkin-Elmer-Calorimeter DSC-1B gemessen; die angegebenen Werte wurden beim zweiten Aufheizen erhalten.

Beispiel 1

Ein Gemisch aus 19,2 g (80 mmol) Natriumsulfid-nonahydrat, 200 ml N-Methylpyrrolidon und 50 ml Toluol wird unter Stickstoff am Wasserabscheider erhitzt, bis die azeotrope Entfernung des Wassers beendet ist. Danach wird das Toluol bis zu einer Sumpftemperatur von 205 °C abdestilliert. Nach Zugabe von 35,76 g (80 mmol) 4,4'-Bis-(p-chlorbenzoyl)-diphenylether wird das Reaktionsgemisch auf 205 °C erhitzt und 21,5 Stunden bei dieser Temperatur gehalten. Man läßt auf 100 °C abkühlen und isoliert das Produkt nach Zugabe von Wasser. Das Produkt wird mit Wasser ausgekocht. Es werden 32,55 g eines grauen Oligomeren mit einer reduzierten spezifischen Viskosität $eta_{red}$ von 0,16 dl/g erhalten. Der Kristallisationsschmelzpunkt $T_m$ liegt bei 325 °C.

Beispiel 2

Ein Gemisch aus 17,88 g (40 mmol) 4,4'-Bis-(p-chlorbenzoyl)-diphenylether, 6,41 g (40 mmol) Kaliumxanthogenat, 3,04 g wasserfreiem Kaliumcarbonat und 100 ml N-Methylpyrrolidon wird auf 160 °C erhitzt und 15 Stunden bei dieser Temperatur gehalten. Die Aufarbeitung erfolgt, wie in Beispiel 1 beschrieben. Man erhält 15,06 g eines hellgrauen Oligomeren mit $eta_{red}$ = 0,16 dl/g und einem Kristallisationsschmelzpunkt $T_m$ von 321 °C.

Beispiel 3

14,00 g (58,32 mmol) Natriumsulfid-nonahydrat werden im Vakuum, zuletzt bei 220 °C, entwässert. Anschließend werden 25,16 g (56,3 mmol) Bis- (p-chlorbenzoyl)-diphenylether und 100 ml wasserfreies Dimethylformamid zugegeben und das Gemisch in einem Autoklaven auf 210 °C erhitzt und 15 Stunden bei dieser Temperatur gehalten. Die Aufarbeitung analog zu Beispiel 1 ergibt 20,77 g eines Polymeren mit $eta_{red}$= 0,25 dl/g, einem Kristallisationsschmelzpunkt von 323 °C und einem Glasübergangspunkt von 151 °C.

Beispiel 4

14,00 (58,32 mmol) Natriumsulfid-nonahydrat werden, zuletzt bei 220 °C, im Vakuum entwässert. Ein Gemisch mit 10,07 g (22,52 mmol) Bis-(p-chlorbenzoyl)-diphenylether, 9,69 g (33,78 mmol) 4,4'-Dichlordiphenylsulfon und 100 ml wasserfreiem Dimethylformamid wird analog zu Beispiel 3 umgesetzt. Man erhält 17,12 g eines amorphen, hellgelben Polymeren mit $eta_{red}$ = 0,48 dl/g.

Beispiel 5

14,00 g (58,32 mmol) Natriumsulfid-nonahydrat werden, zuletzt bei 220 °C, im Vakuum entwässert. Eine Mischung mit 25,10 g (56,15 mmol) Bis-(p-chlorbenzoyl)-diphenylether und 70 g Dimethylbenzamid wird unter Stickstoff erst 8 Stunden bei 220 °C und dann 4 Stunden bei 255 °C gerührt. Danach setzt man 2,0 g 4,4'-Dichlordiphenylsulfon zu und hält weitere 15 Minuten bei 255 °C. Die Reaktionsmischung wird mit dem gleichen Volumen Ethanol versetzt, der Rückstand abgesaugt und 1 Stunde mit Wasser ausgekocht. Man erhält 22,3 g eines Polymeren mit $eta_{red}$ = 0,49 dl/g, einem Kristallisationsschmelzpunkt von 325 °C und einem Glasübergangspunkt von 156 °C.

Beispiel 6

14,00 g (58,32 mmol) Natriumsulfid-nonahydrat werden, zuletzt bei 220 °C, im Vakuum entwässert. Eine Mischung mit 22,59 g (50,54 mmol) Bis-(p-chlorbenzoyl)-diphenylether, 1,99 g (5,62 mmol) 4,4'-Dichlorterephthalophenon (aus Terephthalsäuredichlorid und $AlCl_3$ in überschüssigem Chlorbenzol) und 70 g Dimethylbenzamid wird, analog zu Beispiel 5, erst erhitzt, mit 4,4'-Dichlordiphenylsulfon versetzt und

weiter erwärmt. Analog zu Beispiel 5 wird das Reaktionsprodukt aufgearbeitet. Man erhält 21,8 g eines Polymeren mit $eta_{red}$ = 0,44 dl/g, einem Kristallisationsschmelzpunkt von 319 °C und einem Glasübergangspunkt von 158 °C.

Beispiel 7

Beispiel 6 wird wiederholt. Jedoch werden anstelle des 4,4'-Dichlorterephthalophenons 3,63 g (5,62 mmol) einer Verbindung der Formel

$$(Cl - Ar - CO - Ar - O - Ar)_2\text{-}S$$

eingesetzt (hergestellt aus 4-Chlor-4'-nitrobenzophenon und Thiodiphenol nach der DE-OS 18 07 740). Man erhält 22,9 g eines Polymeren mit $eta_{red}$ = 0,47 dl/g, einem Kristallisationsschmelzpunkt von 314 °C und einem Glasübergangspunkt von 152 °C.

Beispiel 8

Beispiel 6 wird wiederholt. Jedoch werden anstelle des 4,4'-Dichlorterephthalophenons 2,82 g (5,62 mmol) Bis-(4-chlorbenzoylsulfonyl)-diphenyl eingesetzt (hergestellt nach der FR-PS 20 53 336). Man erhält 22,4 g eines Polymeren mit $eta_{red}$ = 0,52 dl/g, einem Kristallisationsschmelzpunkt von 310 °C und einem Glasübergangspunkt von 163 °C.

Beispiel 9

Aus einem Gemisch einer Lösung von 10,00 g $Na_2S\ xH_2O$ (41,65 mmol), 0,20 g Kaliumcarbonat, 2,00 g Kaliumiodid in 3 ml Wasser und 18,63 g 4,4'-Bis(p-chlorbenzoyl)diphenylether, 50,0 g (41,65 mmol) Diphenylsulfon und 40 ml Toluol wird das Wasser unter starkem Rühren azeotrop ausgekreist. Man erhitzt weiter auf 250 °C, hält 10 Minuten diese Temperatur, erhitzt auf 270 °C, hält 30 Minuten diese Temperatur und erhitzt unter Rühren schließlich auf 300 °C und hält 4 Stunden diese Temperatur. Nachdem die Mischung auf 240 °C erkaltet ist, verstzt man mit 70 ml Ethylenglykol, saugt heiß ab und kocht den Rückstand zweimal mit Aceton und zweimal mit Wasser aus. Man erhält 16,1 g eines fast weißen Pulvers mit $eta_{red}$ = 0,40 dl/g und $T_m$ = 339 °C.

Beispiel 10

In eine schwach siedende Mischung aus 380,00 g 4,4'-Bis(p-chlorbenzoyl)diphenylether (849,50 mmol), 1,8 kg Diphenylsulfon und 500 ml Xylol wird im Laufe von 4 Stunden unter starkem Rühren eine Lösung von 204,62 g $Na_2S$ x $H_2O$ (850,00 mmol), 20,0 g Kaliumiodid und 8,0 g Natriumcarbonat in 200 ml Wasser zugetropft, wobei gleichzeitig das Wasser ausgekreist wird. Danach wird unter Abdestillieren des Toluols die Temperatur auf 300 °C erhöht und 5 Stunden gehalten. Nach Aufarbeitung wie oben werden 334 g eines fast weißen Pulvers erhalten; $eta_{red}$ = 0,57 dl/g, $T_m$ = 338 °C.

Beispiel 11

Ein Gemisch von 100,00 g $Na_2S$ x $H_2O$ (415,40 mmol), 4,0 g Natriumcarbonat und 72,60 g Dikaliumsalz des 4,4'-Dihydroxybenzophenons (250,00 mmol), hergestellt nach DE-PS 24 25 166, wird nach Zusatz von 100 ml Wasser durch Erwärmen in eine homogene Lösung überführt. Nach Zugabe von 298,00 g 4,4'-Bis(p-chlorbenzoyl)diphenylether (666,19 mmol), 1,5 kg Diphenylsulfon und 1 l Toluol wird das Wasser unter starkem Rühren ausgekreist. Unter Abdestillieren des Toluols wird 15 Stunden bei 230 °C, 3 Stunden bei 270 °C und 3 Stunden bei 330 °C gerührt. Danach wird auf 280 °C abgekühlt und innerhalb von 15 Minuten, eine Lösung von 6,0 g 4,4'-Dichlordiphenylsulfon in 30 ml Anisol zugetropft, noch 15 Minuten nachgerührt und dann vorsichtig mit 2 l Ethylenglykol versetzt. Die Aufarbeitung wie im Vergleichsbeispiel A ergibt 294 g eines fast weißen Pulvers; $eta_{red}$ = 0,89 dl/g, $T_m$ = 349 °C.

Vergleichsbeispiel A (analog DE-AS 16 20 923)

Aus einem Gemisch von 10,00 g $Na_2S$ x $H_2O$ (41,65 mmol), 0,20 g wasserfreiem Kaliumcarbonat, 18,63 g 4,4'-Bis(p-chlorbenzoyl)diphenylether (41,65 mmol), 50,0 g Diphenylsulfon und 40 ml Toluol wird das Wasser unter starkem Rühren azeotrop ausgekreist. Das Gemisch wird unter gleichzeitigem Abdestillieren des Toluols 10 Minuten bei 250 °C, 30 Minuten bei 270 °C und 5 Stunden bei 300 °C gerührt. Zu diesem Zeitpunkt sind im Reaktionsgemisch noch viele Brocken von nicht umgesetztem Natriumsulfid vorhanden. Zur Aufarbeitung wird bei 240 °C mit 70 ml Ethylenglykol versetzt, heiß abgesaugt und der Rückstand zweimal mit Aceton und zweimal mit Wasser ausgekocht. Man erhält 16,3 g eines grauen Pulvers; etared = 0,19 dl/g, Tm = 321 °C.

Patentansprüche:

1. Verfahren zur Herstellung von Homo- und Copolymeren des Polyarylensulfids, dadurch gekennzeichnet, daß das Polymere wiederkehrende Einheiten der Formel

$$-\!\!\left(Ar\text{-}CO\text{-}Ar\text{-}O\text{-}Ar\text{-}CO\text{-}Ar\text{-}S\right)\!\!-$$

enthält und erhalten wird durch Umsetzung von

I sulfidfreisetzenden Reagenzien, gegebenenfalls im Gemisch mit bis zu 50 Mol-% Bisthiophenolat oder Bisphenolat,

II gegebenenfalls anorganischen Basen,

III einem difunktionellen aromatischen Etherketon der Formel

$$Hal - Ar - CO - Ar - O - Ar- CO - Ar - Hal,$$

wobei Hal für Fluor oder insbesondere Chlor steht, und Ar den difunktionellen aromatischen Rest 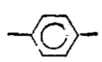 bezeichnet, und gegebenenfalls

IV einer difunktionellen aromatischen Verbindung der Formel

$$Hal\text{-}(Ar\text{-}X)_m\text{-}(Ar\text{-}Y)_n\text{-}Ar\text{-}(Z)_o\text{-}Ar\text{-}(Y\text{-}Ar)_p\text{-}(X\text{-}Ar)_m\text{-}Hal \quad ,$$

wobei Hal und Ar die bereits aufgeführten Bedeutungen haben, m, n, o und p jeweils die Bedeutung von 0 und 1 besitzen, X, Y und Z jeweils für die Gruppierungen -CO- und $-SO_2-$ stehen und Y und X auch -O- und -S- bedeuten können, wenn m den Wert 1 annimmt.

2. Verfahren nach Anspruch 1, dadurch gekennzeichnet, daß man die Umsetzung in Abwesenheit von Sauerstoff bei Temperaturen zwischen 120 und 350 °C vornimmt.

3. Verfahren nach Anspruch 2, dadurch gekennzeichnet, daß man die Umsetzung in Abwesenheit von Wasser durchführt.

4. Verfahren nach den Ansprüchen 1 bis 3, dadurch gekennzeichnet, daß man als sulfidfreisetzendes Reagenz (I) ein Alkalisulfid einsetzt.

5. Verfahren nach Anspruch 4, dadurch gekennzeichnet, daß man, bezogen auf insgesamt 1 Mol difunktioneller Ausgangsverbindungen III und gegebenenfalls IV, 0,8 bis 1,2 Mol Natriumsulfid einsetzt.

6. Verfahren nach den Ansprüchen 1 bis 5, dadurch gekennzeichnet, daß man die Reaktion in Dimethylbenzamid als Lösemittel bei einer Temperatur von 200 - 260 °C unter Atmosphärendruck durchführt.

7. Verfahren nach den Ansprüchen 1 bis 6, dadurch gekennzeichnet, daß man kurz vor Ende der Reaktion ein Alkylierungs-, Acylierung- oder Arylierungsmittel zusetzt.

8. Verfahren nach den Ansprüchen 1 bis 7, dadurch gekennzeichnet, daß man
- das wasserhaltige sulfidfreisetzende Reagenz (I),
  die anorganische Base (II),
  das difunktionelle aromatische Etherketon (III),

die difunktionelle aromatische Verbindung (IV),
Salze, die im organischen Reaktionsmedium zumindest teilweise löslich sind (V), und
das Schleppmittel (VI)
vorlegt

- die Temperatur erhöht, wobei zuerst mit Hilfe des Schleppmittels das Wasser ausgekreist und dann das Schleppmittel abdestilliert wird
- die Polykondensation bei erhöhter Temperatur zu Ende führt.

9. Verfahren nach Anspruch 8.
dadurch gekennzeichnet,
daß man nur die Komponenten III, IV und VI vorlegt und die wäßrige Lösung der Komponenten I, II und V in einem solchen Maße zutropft, daß das zutropfende Wasser praktisch gleichzeitig mit dem Schleppmittel ausgekreist wird.

10. Polymer mit wiederkehren Einheiten der Formel

$$-\!\!(Ar - CO - Ar - O - Ar - CO - Ar - S)\!\!- ,$$

erhältlich nach den Ansprüchen 1 bis 9 durch Umsetzung von I und II mit III

11. Copolymer, erhältlich nach den Ansprüchen 1 bis 9, wobei m, n und p den Wert 0 haben, o = 1 ist und Z für die Gruppierung $-SO_2-$ steht.

12. Copolymer, erhältlich nach den Ansprüchen 1 bis 9, wobei m = 0 und n = o = p = 1 ist und Y und Z für die Gruppierung -CO stehen.

13. Copolymer, erhältlich nach den Ansprüchen 1 bis 9, wobei m = n = 0, o = p = 1 und Y = Z = -CO-.

Europäisches Patentamt

# EUROPÄISCHER RECHERCHENBERICHT

0193755

Nummer der Anmeldung

EP 86 10 1735

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| P,A | PATENT ABSTRACTS OF JAPAN, Band 9, Nr. 188 (C-295)[1911], 3. August 1985; & JP - A - 60 58435 (TORAY K.K.) 04.04.1985<br>--- | 1 | C 08 G 75/02<br>C 08 G 75/23 |
| D,A | DE-A-2 549 529 (BASFAG)<br>* Ansprüche 1, 3; Seite 5, Formeln (V), (VI) *<br>--- | 1,10 | |
| A | US-A-4 016 145 (R.W. CAMPBELL)<br>* Anspruch 1 *<br>--- | 1 | |
| D,A | DE-A-2 749 645 (BASF AG)<br>* Ansprüche 1, 2, 4 *<br>--- | 1 | |
| D,A | DE-A-2 164 291 (IMPERIAL CHEMICAL INDUSTRIES LTD.)<br>* Anspruch 1 *<br>--- | 1 | RECHERCHIERTE SACHGEBIETE (Int. Cl.4) |
| D,A | DE-A-1 620 923 (IMPERIAL CHEMICAL INDUSTRIES LTD.)<br>* Anspruch 1 *<br>--- | 1 | C 08 G 75/00 |
| D,A | DE-A-3 205 996 (BAYER AG)<br>* Anspruch 1 *<br>--- | 1 | |
| D,A | DE-A-2 817 731 (PHILLIPS PETROLEUM CO.)<br>* Anspruch 1 *<br>----- | 1 | |

Der vorliegende Recherchenbericht wurde für alle Patentansprüche erstellt.

| Recherchenort | Abschlußdatum der Recherche | Prüfer |
|---|---|---|
| BERLIN | 30-05-1986 | HASS C V F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument